# FASCICULE DE BREVET EUROPEEN

(11) **EP 2 708 456 B1**
(45) Date de publication et mention de la délivrance du brevet: **31.05.2017**
(21) Numéro de dépôt: 13184765.9
(22) Date de dépôt: 17.09.2013
(51) Int. Cl.: B62J 17/08

(54) **Dispositif d'habitacle pour véhicule à moteur**
Fahrzeuginnenraumvorrichtung für Kraftfahrzeug
Passenger compartment device for a motor vehicle

(30) Priorité: 17.09.2012 FR 1202467; 17.09.2012 FR 1202468; 17.09.2012 FR 1202469
(43) Date de publication de la demande: 19.03.2014
(73) Titulaire: Gauthier, Marc Jean Pierre, 92700 Colombes (FR)
(72) Inventeur: Gauthier, Marc Jean Pierre, 92700 Colombes (FR)
(74) Mandataire: Camus, Olivier Jean-Claude

(56) Documents cités:
- EP-A2- 0 820 924
- DE-A1- 10 227 166
- FR-A1- 2 649 064
- FR-A1- 2 768 389

## Description

### DOMAINE TECHNIQUE DE L'INVENTION

Le domaine technique de l'invention est celui des dispositifs d'habitacle pour véhicule à moteur, et en particulier pour un véhicule à moteur comportant une première place pour un pilote et une seconde place pour un passager.

### ARRIERE-PLAN TECHNOLOGIQUE DE L'INVENTION

Il existe dans l'état de la technique, pour de tels véhicules, des dispositifs d'habitacle comportant un toit et un dossier pour pilote (voir par exemple le document FR-A-2649064). Cependant, seule la place pilote est abritée par le toit, tandis que la place passager se trouve :
- soit reléguée hors du dispositif d'habitacle, à l'extérieur du toit, et exposée aux intempéries ;
- soit occupée par l'adjonction d'un coffre haut et rendue inutilisable pour un passager.

Il est également connu de l'état de la technique des dispositifs d'habitacle comportant un toit rigide couvrant les places pilote et passager, mais sans dossier pour le pilote. De plus, ces dispositifs sont « fermés » à l'arrière, ce qui est susceptible de considérablement les alourdir et/ou d'empêcher une circulation d'air optimale autour du véhicule en mouvement.

### RESUME DE L'INVENTION

L'invention offre une solution aux problèmes évoqués précédemment, en proposant, pour un véhicule à moteur présentant une place pilote et une place passager, un dispositif d'habitacle comportant un toit abritant lesdites place pilote et place passager, ainsi qu'un dossier pour pilote.

L'invention concerne donc essentiellement un dispositif d'habitacle pour un véhicule à moteur présentant au moins une place pilote et une place passager située derrière la place pilote, le dispositif d'habitacle comportant une structure de support d'un pare-brise et d'un toit abritant la place pilote et la place passager, la structure de support étant destinée à être fixée audit véhicule à moteur,
le dispositif d'habitacle comprenant :
- un support pendulaire fixé à la structure de support par l'intermédiaire d'au moins une liaison pivot, et
- un dossier amovible pour pilote présentant un premier moyen d'accroche permettant de rendre ledit dossier amovible solidaire du support pendulaire.

Grâce à l'invention, on permet l'utilisation, dans un dispositif d'habitacle comportant un toit apte à recouvrir et abriter une place pilote et une place passager d'un véhicule à moteur, d'un dossier pour pilote, tout en préservant la possibilité d'accéder facilement et rapidement à la place passager et d'utiliser ladite place passager.

Outre les caractéristiques qui viennent d'être évoquées dans le paragraphe précédent, le dispositif d'habitacle selon l'invention peut présenter une ou plusieurs caractéristiques complémentaires parmi les suivantes, considérées individuellement ou selon toutes les combinaisons techniquement possibles :
- Le dossier amovible présente un deuxième moyen d'accroche permettant de rendre ledit dossier amovible solidaire dudit véhicule à moteur.

Ainsi, le dossier amovible présentant deux points d'accroche, on améliore avantageusement la solidité de l'accroche et du maintien dudit dossier amovible.
- Le deuxième moyen d'accroche du dossier amovible permet de rendre ledit dossier amovible solidaire de la structure de support et du véhicule à moteur.
   Ainsi, on améliore avantageusement la solidité de l'accroche et du maintien dudit dossier amovible, tout en contribuant à perfectionner la stabilité du dispositif d'habitacle.
- Le dispositif d'habitacle comporte un système de sécurisation du deuxième moyen d'accroche du dossier amovible.

Un tel système de sécurisation du deuxième moyen d'accroche du dossier amovible permet avantageusement de s'assurer que le deuxième moyen d'accroche ne peut être manipulé, enclenché et désenclenché que par une personne de confiance, telle que le propriétaire du véhicule.
- Le système de sécurisation du deuxième moyen d'accroche est un coffre arrière pouvant être verrouillé.

De cette manière, on restreint avantageusement l'accès audit deuxième moyen d'accroche au moyen d'un coffre, c'est-à-dire d'un équipement pour le transport d'objets, classiquement présent sur un véhicule et bénéficiant d'un système de verrouillage, comme une clé.
- Le support pendulaire comporte des premier et deuxième bras, respectivement fixés à des premier et deuxième montants latéraux de la structure de support au moyen d'une première liaison pivot et d'une deuxième liaison pivot.

Ainsi, le support pendulaire présentant deux points de fixation, on améliore avantageusement la solidité de la fixation tout en répartissant la charge du support pendulaire sur le support de structure.
- Le support pendulaire a sensiblement une forme d'une lettre choisie parmi la liste suivante : « U », « V », « Y », « H », « X », « M ».
- Le support pendulaire présente :
   o une position de rangement, selon laquelle ledit support pendulaire se trouve dans un plan sensiblement parallèle au plan du toit ;
   o une position déployée, selon laquelle ledit support pendulaire se trouve dans un plan sensiblement perpendiculaire au plan du toit.

Ainsi, le support pendulaire permet avantageusement, dans sa position de rangement, un accès simple à la place passager et l'utilisation de ladite place passager par un passager dans des conditions de confort au moins égales à celles offertes par le véhicule en l'absence du dispositif d'habitacle de l'invention. Une telle position de rangement dans un plan sensiblement parallèle au plan du toit offre en outre une excellente optimisation de l'espace et du volume du dispositif d'habitacle. Lorsque le support pendulaire se trouve dans sa position déployée, le dossier amovible peut facilement lui être accroché, optimisant ainsi le confort voire la sécurité du pilote qui pourra notamment s'appuyer sur le dossier amovible. On notera que le basculement du support pendulaire entre sa position de rangement et sa position déployée s'effectue d'une manière très simple, pratique et rapide, par rotation du support pendulaire autour de l'axe de la liaison pivot, ou des liaisons pivot, qui fixent le support pendulaire à la structure de support du dispositif d'habitacle de l'invention.
- Le support pendulaire comprend un moyen d'attache dudit support pendulaire à la structure de support pour le maintien du support pendulaire dans la position de rangement.

Ainsi, on peut avantageusement garantir et sécuriser le maintien du support pendulaire dans sa position de rangement.
- Le moyen d'attache du support pendulaire à la structure de support comporte une languette métallique et une vis de verrouillage positionnée dans ladite languette métallique.
- Le dispositif d'habitacle comporte un moyen de réglage de la position et/ou de l'orientation du dossier amovible.

Ainsi, on contribue avantageusement au confort du pilote en proposant un système capable de s'adapter souplement au gabarit et/ou aux préférences et habitudes d'utilisation du pilote. Le moyen de réglage de la position et/ou de l'orientation du dossier amovible peut en particulier mettre en oeuvre un système de réglage à cran de la position de fixation du support pendulaire sur la structure de support.
- Le deuxième moyen d'accroche du dossier amovible comprend une charnière à ressort fixée d'une part audit dossier amovible et prolongée d'autre part par une tôle d'appui, la charnière à ressort permettant de rabattre la tôle d'appui dans un plan sensiblement parallèle au plan du dossier amovible.
- Le véhicule à moteur est choisi parmi la liste suivante : un scooter, une motocyclette, un tricycle, un quadricycle.
- La structure de support est une structure ouverte à l'arrière, où on entend par « arrière » le côté de la structure le plus éloigné du pare-brise.

Ainsi, la structure de support bénéficie avantageusement d'une meilleure circulation de l'air et d'une meilleure aération, tout en offrant plus de légèreté.
- Le toit est rigide et le toit est apte à recouvrir la place pilote et la place passager.
- Le support de structure est en acier.
- Le dispositif d'habitacle a une masse inférieure ou égale à 20% de la masse du véhicule à moteur.
- Le dossier amovible est apte à être rangé dans un coffre arrière du véhicule à moteur.
- Le dossier amovible est apte à être rangé dans un coffre sous selle du véhicule à moteur.

L'invention concerne également un procédé de changement de configuration d'un dispositif d'habitacle conforme à l'invention, d'une configuration « monoplace » à une configuration « biplace », le procédé comportant :
- une première étape selon laquelle le support pendulaire se trouvant initialement dans un plan sensiblement perpendiculaire au plan du toit et le dossier amovible étant solidaire du support pendulaire grâce à son premier moyen d'accroche, on désolidarise le dossier amovible du support pendulaire ;
- une deuxième étape selon laquelle le support pendulaire effectue un mouvement de rotation autour de l'axe de la liaison pivot afin de placer ledit support pendulaire dans un plan sensiblement parallèle au plan du toit.

L'invention concerne également un procédé de montage d'un dispositif d'habitacle selon l'invention, le procédé comportant les étapes suivantes :
- démontage d'un pare-brise du véhicule à moteur, ledit démontage libérant un premier emplacement de fixation ;
- fixation du dispositif d'habitacle sur le premier emplacement de fixation ;
- démontage d'un élément arrière du véhicule à moteur, ledit démontage libérant un deuxième emplacement de fixation ;
- fixation du dispositif d'habitacle sur le deuxième emplacement de fixation préexistant du véhicule à moteur.

L'élément arrière du véhicule à moteur est typiquement un élément démontable de carrosserie dudit véhicule à moteur, et par exemple un dosseret ou un cache arrière dudit véhicule à moteur.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre un support pendulaire et un dossier amovible d'un dispositif d'habitacle selon un premier mode de réalisation de l'invention.
- La figure 2 montre le support pendulaire du dispositif d'habitacle de la figure 1.
- La figure 3 montre le dossier amovible du dispositif d'habitacle de la figure 1.
- La figure 4 montre un dispositif d'habitacle selon le premier mode de réalisation de l'invention.
- La figure 5a montre une vue avant d'un dispositif d'habitacle.
- La figure 5b montre une vue arrière du dispositif d'habitacle de la figure 5a.
- La figure 6 montre un dispositif d'habitacle.
- La figure 7 montre un dispositif d'habitacle.
- La figure 8a montre un véhicule à moteur équipé du dispositif d'habitacle de la figure 4 dans une position déployée.
- La figure 8b montre un véhicule à moteur équipé du dispositif d'habitacle de la figure 4 dans une position de rangement.
- La figure 9a montre une vue de dessous du dispositif d'habitacle de la figure 4 dans la position déployée.
- La figure 9b montre une vue de dessous du dispositif d'habitacle de la figure 4 dans la position de rangement.
- La figure 9c montre un détail de la figure 9b.
- La figure 10a montre une vue de profil du dispositif d'habitacle de la figure 4 dans la position déployée.
- La figure 10b montre une vue de profil du dispositif d'habitacle de la figure 4 dans la position de rangement.
- La figure 11 montre une vue de face d'un véhicule à moteur équipé du dispositif d'habitacle de la figure 4.
- La figure 12 montre une vue de dos d'un véhicule à moteur équipé du dispositif d'habitacle de la figure 4.
- La figure 13 montre une vue de dessus du dispositif d'habitacle de la figure 4.
- La figure 14 montre une vue de dessous du dispositif d'habitacle de la figure 4.
- La figure 15 montre une vue éclatée du dispositif d'habitacle de la figure 4.
- Les figures 16a à 16s montrent des détails des pièces de la vue éclatée de la figure 15.

### DESCRIPTION DETAILLEE D'AU MOINS UN MODE DE REALISATION DE L'INVENTION

Sauf précision contraire, un même élément apparaissant sur des figures différentes présente une référence unique.

Selon une première variante, on peut considérer que le dispositif d'habitacle de l'invention peut être illustré et mieux compris à travers la description suivante, concernant l'ajout d'un dossier pour pilote sur un scooter équipé d'un toit rigide couvrant le pilote et le passager.

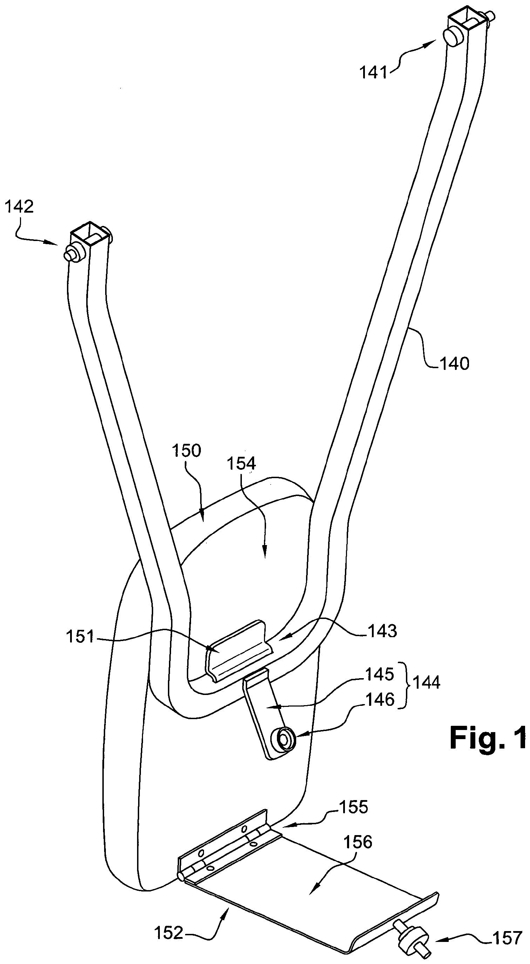

Les figures 1 à 7 illustrent l'ajout d'un dossier pour pilote sur un scooter équipé d'un toit rigide couvrant le pilote et le passager.

Les figures 1, 2, 3 et 4 illustrent un dispositif selon l'invention avec une structure tubulaire 140 dans une forme proche de la lettre « U ».

La figure 1 représente une vue arrière haute de côté du dispositif complet avec la structure tubulaire 140, le dossier 150 et la tôle d'appui 156.

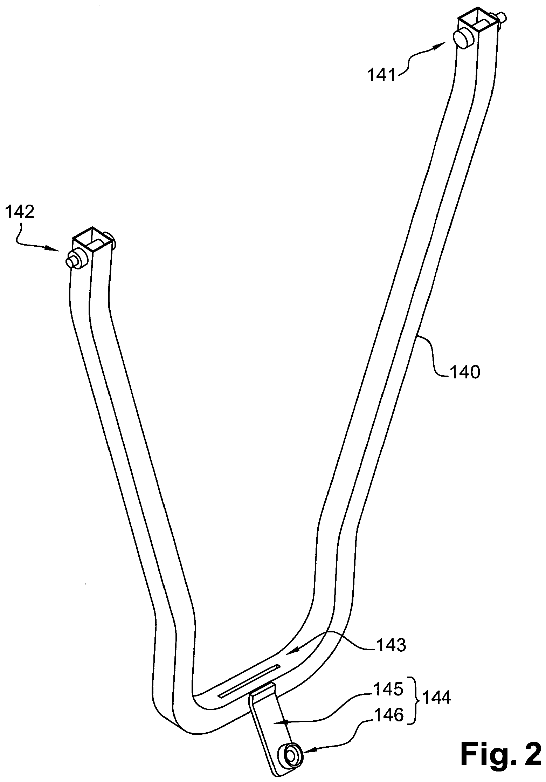

La figure 2 représente uniquement la structure tubulaire 140 avec ses trois points d'attache 141, 142, 143.

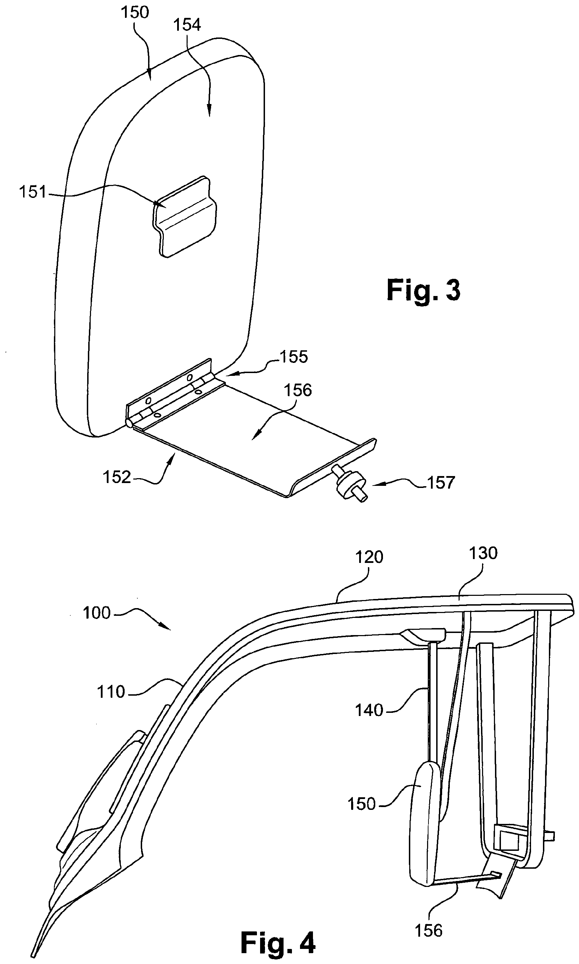

La figure 3 représente le dossier 150 et la tôle d'appui 156, montrant ainsi la patte d'accroche 151 du dossier 150.

La figure 4 représente le dispositif complet monté dans une architecture 100 de scooter avec toit 120 rigide couvrant le pilote et le passager.

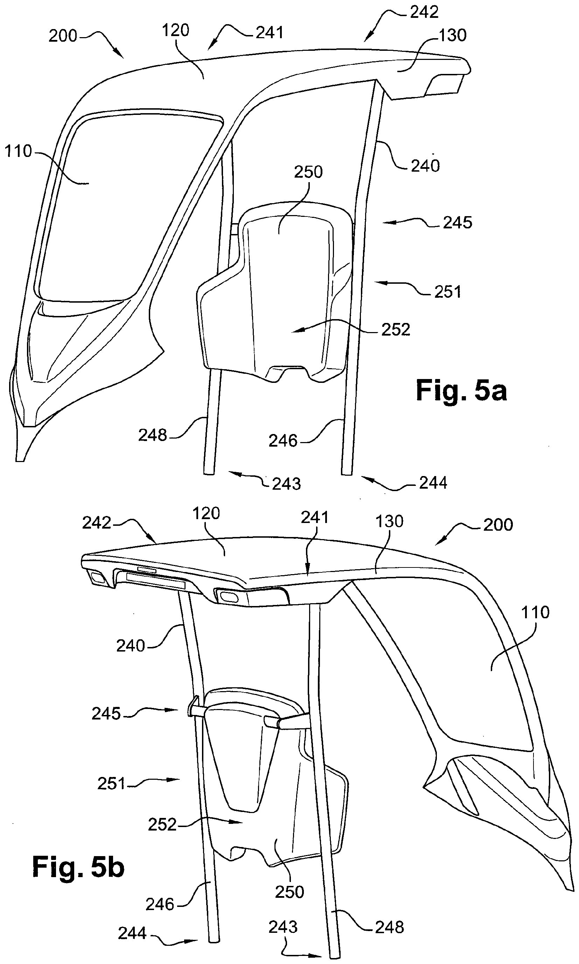

Les figures 5a et 5b illustrent un dispositif non couvert par l'invention avec une structure tubulaire 240 dans une forme proche de la lettre « H » monté dans une architecture 200 de scooter.

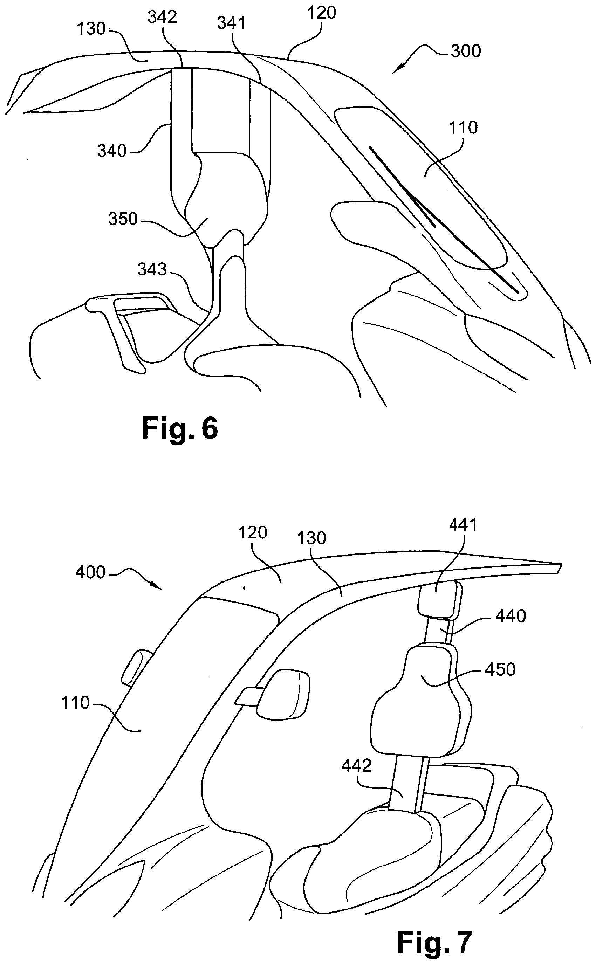

La figure 6 illustre un dispositif non couvert par l'invention avec une structure tubulaire 340 dans une forme proche de la lettre « Y » monté dans une architecture 300 de scooter.

La figure 7 illustre un dispositif non couvert par l'invention avec une structure tubulaire 440 dans une forme proche de la lettre « I » monté dans une architecture 400 de scooter.

Le dispositif selon l'invention, dans une architecture de scooter avec toit rigide couvrant le pilote et le passager, permet l'ajout d'un dossier pour augmenter le confort en soutenant le dos du pilote et en lui donnant une assise plus saine et plus sécurisante, limitant ainsi les problèmes sanitaires de mal au dos.

La solution technique mise en oeuvre pour bénéficier d'un dossier pilote est de créer une structure verticale entre la structure tubulaire horizontale du toit rigide et la structure tubulaire horizontale du scooter d'origine.

Quatre possibilités de montage sont présentées :
- Aux figures 1, 2, 3 et 4, une structure pendulaire 140 de forme proche de la lettre « U » reliée à la structure 130 horizontale du toit rigide et équilibrée par une tôle arrière à 90° qui fait contre-force àla pression du dos du pilote sur la partie arrière de la structure 130 du toit 120 rigide, le dossier 150 faisant le lien entre ces deux éléments, le tout sans porter atteinte à l'intégrité du scooter d'origine, donc sans toucher la structure basse du scooter et sans percer la carrosserie (ou la selle) pour atteindre le cadre du scooter. Cette structure 140 est attachée en deux points 141, 142 à la structure 130 horizontale du toit 120 et en un point central 143 par la patte d'accroche 151 de la plaque arrière 154 en acier du dossier 150 en mousse de polyuréthane, celle-ci est connectée par une charnière à ressort 155 à une tôle d'appui 156 reliée au support de structure 130 arrière du toit, avec un verrouillage de sécurité 157 par écrou molette à serrage rapide accessible dans le coffre arrière du scooter.
- Aux figures 5a et 5b, une structure tubulaire 240 fixe de forme proche de la lettre « H » reliant la structure horizontale 130 du toit rigide à la structure horizontale du cadre du scooter d'origine, en perçant la carrosserie sur chaque côté pour atteindre la structure tubulaire, la barre horizontale 245 du « H » servant à l'attache du dossier 250. Cette structure 240 est attachée en deux points 241, 242 à la structure 130 horizontale du toit et en deux points 243, 244 sur la structure tubulaire du scooter d'origine, en traversant la carrosserie, de part et d'autre de la selle, le dossier 250 est attaché à la barre horizontale 245 du « H » en pivot mobile et calé vers l'arrière par les deux barres verticales 246, 248 contre les deux côtés saillants 251, 252 du dossier 250.
- A la figure 6, une structure tubulaire 340 fixe de forme proche de la lettre « Y » reliant la structure horizontale 130 du toit rigide au centre de la selle, s'appuyant sur celle-ci ou la traversant pour atteindre la structure interne du scooter d'origine, le point central du « Y » servant à l'attache du dossier 350. Cette structure 340 est attachée en deux points 341, 342 à la structure horizontale 130 du toit et en un seul point 343 sur le siège du scooter d'origine, le traversant pour atteindre la structure interne du scooter d'origine ou le recouvrant ou l'encerclant pour veiller à la stabilité du dispositif, le dossier 350 est attaché à la partie centrale du « Y ».
- A la figure 7, une structure tubulaire 440 fixe de forme proche de la lettre « I » reliant la structure horizontale 130 du toit rigide au centre de la selle, s'appuyant sur celle-ci ou la traversant pour atteindre la structure interne du scooter d'origine, le point central du « I » servant à l'attache du dossier 450. Cette structure 440 est attachée en un seul point 441 à la structure horizontale 130 du toit rigide et en un seul point 442 sur le siège du scooter d'origine, le traversant pour atteindre la structure interne du scooter d'origine ou le recouvrant ou l'encerclant pour veiller à la stabilité du dispositif, le dossier 450 est attaché sur une partie de la hauteur du « I ».

En référence aux figures 1 à 4 de l'invention dans sa forme proche de la lettre « U », la structure tubulaire 140 de support du dossier 150 est attachée en partie haute en deux points 141, 142 à la structure 130 du toit 120 rigide, et attachée en partie basse en un point central 143 sur la patte d'accroche 151 de la plaque arrière 154 du dossier 150.

Le dossier 150 est composé d'une mousse en polyuréthane collée à une plaque 154 en acier, d'une patte d'accroche 151 pour la connexion à la structure tubulaire 140, et d'une charnière à ressort 155 pour la connexion à la tôle d'appui 156.

La tôle d'appui 156 relie la plaque 154 du dossier 150 par la charnière à ressort 155 au support de structure arrière 130 du toit 120 rigide avec un verrouillage de sécurité 157 par écrou molette à serrage rapide accessible dans le coffre arrière du scooter.

A titre indicatif, pour la structure tubulaire 140, l'écartement entre les deux points d'attache 141, 142 à la structure 130 du toit rigide est de 530 mm, la hauteur globale de la structure 140 est de 730 mm, le tube d'acier utilisé est un carré creux à bords arrondis de 28 mm dont la tranche en acier est d'une épaisseur de 3 mm. Le dossier 150 est de forme rectangulaire avec coins arrondis, faisant 440 mm de hauteur et 260 mm de largeur. La tôle d'appui 156 est une plaque d'acier de 3 mm d'épaisseur, longue de 285 mm et large de 120 mm.

Bien évidemment, d'autres dimensions et matières sur cette réalisation basée sur l'invention dans sa forme proche de la lettre « U » sont aussi possibles.

D'autres réalisations basées sur l'invention dans ses formes proches des lettres « H », « Y » ou « I » sont aussi possibles, tout comme une configuration en forme de « A », « M », « T », « V » ou « X ».

Le dispositif est utilisable sur tout scooter à deux, trois ou quatre roues, équipé d'une structure de toit rigide couvrant le pilote et le passager.

On décrit donc, en référence aux figures 1 à 7, un dispositif pour l'adjonction d'un dossier 150, 250, 350, 450 pour pilote sur un scooter à deux, trois ou quatre roues, équipé d'un toit 120 rigide couvrant le pilote et le passager. Une structure 130 en acier supporte le toit rigide ainsi qu'un pare-brise 110 et la structure 140, 240, 340, 440 du dossier pour pilote. Cette structure 130 en acier est identique à la structure interne du scooter d'origine qui passe horizontalement sous les côtés de la selle du scooter.

Les figures 1 à 4 montrent une structure tubulaire 140 de forme proche de la lettre « U », attachée en partie haute en deux points 141, 142 à la structure horizontale 130 du toit 120 rigide, et attachée en partie basse en un point central 143 par la patte d'accroche 151 de la plaque arrière 154 en acier du dossier 150 en mousse de polyuréthane, celle-ci étant aussi connectée par une charnière à ressort 155 à une tôle d'appui 156 reliée au support de structure arrière 130 du toit 120 rigide, avec un verrouillage de sécurité 157 par écrou molette à serrage rapide accessible dans le coffre arrière du scooter.

Les figures 5a et 5b montrent une structure tubulaire 240 de forme proche de la lettre « H », attachée en partie haute en deux points 241, 242 à la structure horizontale 130 du toit 120 rigide, et en partie basse en deux points 243, 244 sur la structure tubulaire du scooter d'origine, en traversant la carrosserie, de part et d'autre de la selle, le dossier 250 étant attaché à la barre horizontale 245 du « H » en pivot mobile et calé vers l'arrière par les deux barres verticales 246, 248 contre les deux côtés saillants 251, 252 du dossier.

La figure 6 montre la structure tubulaire 340 de forme proche de la lettre « Y », attachée en partie haute en deux points 341, 342 à la structure 130 horizontale du toit 120 rigide, et en partie basse en un seul point 343 sur le siège du scooter d'origine, le traversant pour atteindre la structure interne du scooter d'origine ou le recouvrant ou l'encerclant pour veiller à la stabilité du dispositif, le dossier 350 est attaché à la partie centrale du « Y ».

La figure 7 montre la structure tubulaire 440 de forme proche de la lettre « I », attachée en partie haute en un seul point 441 à la structure 130 horizontale du toit 120 rigide, et en partie basse en un seul point 442 sur le siège du scooter d'origine, le traversant pour atteindre la structure interne du scooter d'origine ou le recouvrant ou l'encerclant pour veiller à la stabilité du dispositif, le dossier 450 est attaché sur une partie de la hauteur du « I ».

Selon une alternative, la structure tubulaire est de forme proche d'une des lettres suivantes : « A », « M », « T », « V » ou « X ».

Selon une deuxième variante, on peut considérer que le dispositif d'habitacle de l'invention peut être illustré et mieux compris à travers la description suivante, concernant, pour un scooter équipé d'un toit rigide couvrant le pilote et le passager, et d'un dossier pour le pilote, la capacité à accéder au coffre sous la selle et de récupérer l'utilisation du siège arrière par un passager.

Dans une architecture de scooter avec toit rigide couvrant le pilote et le passager, et avec un dossier pour le pilote ayant une structure de soutien de forme proche de la lettre « U », reliée à la structure horizontale du toit rigide et équilibrée par une tôle arrière à 90° qui fait contre-force à la pression du dos du pilote sur la partie arrière de la structure du toit rigide, le dossier faisant le lien entre ces deux éléments, le tout sans porter atteinte à l'intégrité du scooter d'origine, le dispositif selon l'invention permet de rendre mobiles et amovibles les éléments bloquant l'accès au coffre sous la selle du scooter et rendant l'assise du passager difficile. Dans cette configuration, le dossier et sa tôle arrière de soutien sont amovibles en dévissant l'écrou molette à serrage rapide accessible par le coffre arrière et en soulevant le dossier pour désengager sa patte d'accroche du point d'attache basse de la structure tubulaire, qui elle-même pivote autour de son axe haut vers l'avant à 90° pour venir se verrouiller sous le tot rigide par une attache vissée. Le dossier démonté peut alors se ranger dans le coffre sous la selle.
Le scooter se retrouve alors avec uniquement sa structure de toit rigide, sans dossier pour pilote, et donc avec la place arrière sur la selle disponible pour un passager, et la selle pouvant se soulever pour accéder au coffre en dessous.

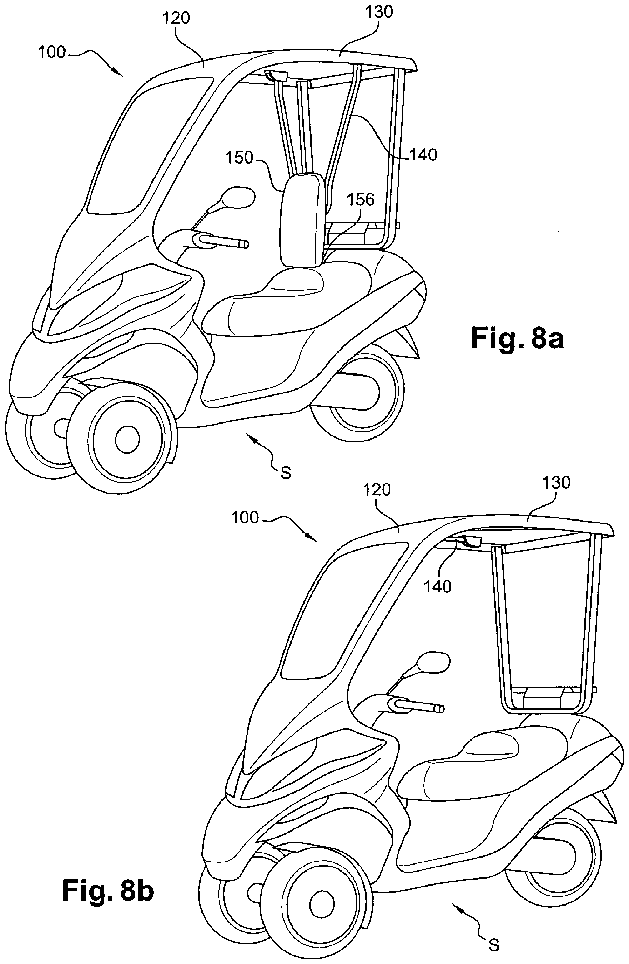

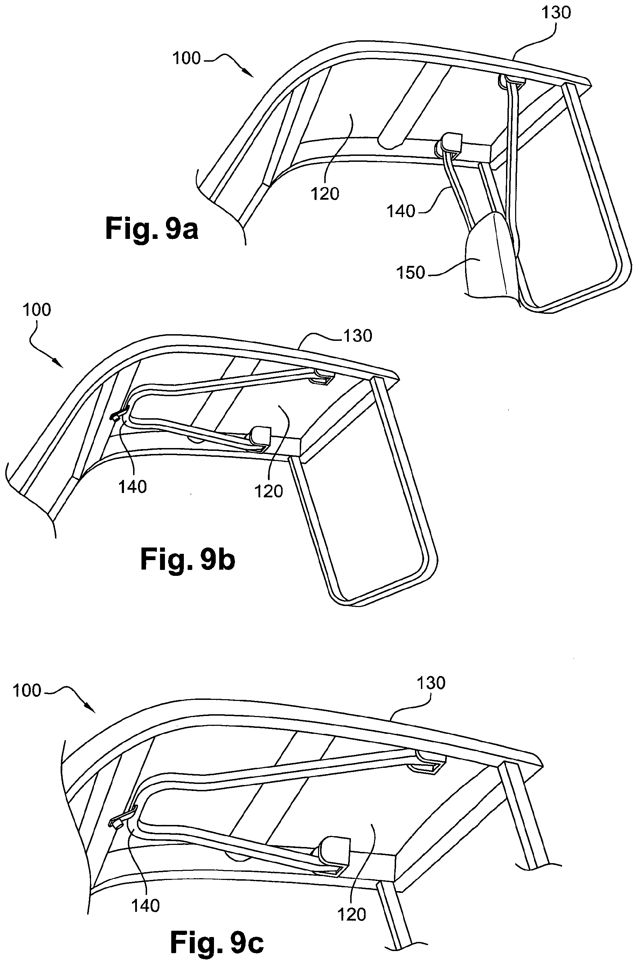

Les figures 1 à 4 précédemment décrites, ainsi que les figures 8a, 8b, 9a, 9b et 9c illustrent un dispositif selon l'invention permettant, pour un scooter équipé d'un dossier pour pilote et d'un toit rigide couvrant le pilote et le passager, d'accéder à un coffre sous la selle et de récupérer l'utilisation du siège arrière par un passager.

La figure 1 représente une vue arrière haute de côté du dispositif complet avec la structure tubulaire 140, le dossier 150 et la tôle d'appui 156. Dans cette configuration, le dispositif est stable mais l'accès au coffre sous la selle est impossible et la place arrière du passager est difficile à utiliser et inconfortable.

La figure 2 représente la partie 140 qui est rotative et peut se ranger sous le toit 120 rigide, c'est-à-dire la structure tubulaire 140 avec ses trois points d'attache 141, 142, 143, les deux points 141, 142 du haut en rotation sur leur axe pour permettre le rangement de la structure 140 sous le toit 120, et celui 143 du bas permettant l'accrochage et le décrochage du dossier 150, ainsi que la patte 145 de verrouillage sous le toit 120.

La figure 3 représente la partie 150 qui est amovible et peut se ranger dans le coffre sous la selle, c'est-à-dire le dossier 150 et la tôle d'appui 156, montrant ainsi la patte d'accroche 151 du dossier 150.

La figure 8a représente le dispositif complet monté, sur un scooter S, dans une architecture 100 de scooter avec toit 120 rigide couvrant le pilote et le passager, et avec le dossier 150 accroché à son support et la structure tubulaire 140 en position verticale, le tout stabilisé par la tôle 156 de support arrière.

La figure 8b représente le dispositif complet monté, sur le scooter S, dans une architecture 100 de scooter avec toit 120 rigide couvrant le pilote et le passager, et avec le dossier 150 décroché de son support et rangé sous la selle, et la structure tubulaire 140 en position horizontale, sous le toit 120 rigide.

La figure 9a représente uniquement le dispositif en position « avec dossier pilote », donc « mono-place », avec le dossier 150 accroché à son support et la structure tubulaire 140 en position verticale, le tout stabilisé par la tôle de support arrière (non représentée sur la figure 9a).

La figure 9b représente uniquement le dispositif en position « sans dossier pilote », donc « bi-place », avec le dossier 150 (non représenté sur la figure 9b) décroché de son support et rangé sous la selle, et la structure tubulaire 140 en position horizontale, sous le toit 120 rigide.

La figure 9c représente en particulier la structure tubulaire 140 en position horizontale, verrouillée sous le toit 120 rigide grâce à une patte 145 d'accroche et une vis 146.

En référence aux figures 1, 2, 3, 8a et 8b, la structure tubulaire 140 de support du dossier 150 est attachée en partie haute en deux points 141, 142 sur axe rotatif à la structure 130 du toit 120 rigide, et attachée en partie basse en un point central 143 sur la patte d'accroche 151 de la plaque arrière 154 du dossier 150. Une fois le dossier 150 décroché de la structure de support 140, cette dernière peut pivoter à 90° vers l'avant jusqu'à atteindre un point d'accroche sous le toit 120 rigide, et être verrouillée dans cette position par une vis 146 positionnée dans une languette métallique 145. Le dossier 150 est collé à une plaque en acier 154 avec une patte d'accroche 151 pour la connexion à la structure tubulaire 140 et une charnière à ressort 155 pour la connexion à la tôle d'appui 156, cette dernière reliant alors le support 130 de structure arrière du toit 120 rigide avec un verrouillage de sécurité 157 par écrou molette à serrage rapide accessible dans le coffre arrière du scooter 1.

A titre indicatif, pour la structure 140 tubulaire, l'écartement entre les deux points d'attache 141, 142 à la structure 130 du toit 120 rigide est de 530 mm, la hauteur globale de la structure 140 est de 730 mm, le tube d'acier utilisé est un carré creux à bords arrondis de 28 mm dont la tranche en acier est d'une épaisseur de 3 mm. Le dossier 150 est de forme rectangulaire avec coins arrondis, faisant 440 mm de hauteur et 260 mm de largeur. La tôle d'appui 156 est une plaque d'acier de 3 mm d'épaisseur, longue de 285 mm et large de 120 mm.

Bien évidemment, d'autres dimensions et matières sur cette réalisation basée sur l'invention dans sa forme proche de la lettre « U » sont aussi possibles.

Le dispositif est utilisable sur tout scooter à deux, trois ou quatre roues, équipé d'une structure 130 de toit 120 rigide couvrant le pilote et le passager, et d'un dispositif 140 de dossier 150 pour pilote en forme de « U ».

On décrit donc, en référence aux figures 1, 2, 3, 8a, 8b, 9a, 9b et 9c, un dispositif permettant l'accès au coffre sous la selle et l'utilisation de la place arrière de la selle pour le transport d'un passager, sur un scooter à deux, trois ou quatre roues, équipé d'un toit rigide couvrant le pilote et le passager, et d'un dispositif de dossier pour pilote en forme proche de la lettre « U ».

Les figures 1 et 3 montrent le dossier 150 collé à une plaque 154 en acier avec une patte d'accroche 151 pour la connexion à la structure tubulaire 140 et une charnière à ressort 155 pour la connexion à la tôle d'appui 156, cette dernière reliant alors le support de structure 130 arrière du toit 120 rigide avec un verrouillage de sécurité 157 par écrou molette à serrage rapide accessible dans le coffre arrière du scooter. Une fois décroché de la structure 140, il peut alors être rangé dans le coffre sous la selle.

Les figures 1 et 2 montrent la structure tubulaire 140 de support du dossier 150 attachée en partie haute en deux points 141, 142 sur axe rotatif à la structure 130 du toit 120 rigide, et attachée en partie basse en un point central 143 sur la patte d'accroche 151 de la plaque arrière 154 du dossier 150. Une fois le dossier 150 décroché de la structure 140 de support, cette dernière peut pivoter à 90° vers l'avant jusqu'à atteindre un point d'accroche sous le toit 120 rigide, et être verrouillée dans cette position par une vis 146 positionnée dans une languette métallique 145. Cela libère alors l'accès au coffre sous la selle et la place arrière de passager sur la selle.

L'invention concerne donc un dispositif permettant de faire disparaître, c'est-à-dire de rendre amovible le dossier du pilote sur un scooter à deux, trois ou quatre roues, équipé d'un toit rigide couvrant le pilote et le passager. L'invention concerne un dispositif permettant ainsi l'accès au coffre sous la selle et l'utilisation de la place arrière de la selle pour le transport d'un passager. Le dispositif de l'invention est constitué de deux éléments majeurs : un dossier 150 de pilote qui est décrochable de sa structure 140 de soutien et de la structure 130 arrière du toit rigide, il peut alors être rangé dans le coffre sous la selle ; et une structure 140 de support du dossier qui est rotative à 90° vers l'avant et verrouillable sous le toit 120 rigide, libérant ainsi l'accès au coffre sous la selle et la place arrière de passager sur la selle. Le dispositif est utilisable sur tout scooter à deux, trois ou quatre roues, équipé d'une structure 130 de toit 120 rigide couvrant le pilote et le passager, et d'un dispositif 140 de dossier 150 pour pilote en forme de « U ».

Selon une troisième variante, on peut considérer que le dispositif d'habitacle de l'invention peut être illustré et mieux compris à travers la description suivante, concernant l'ajout d'un complément de carrosserie pour scooter, un kit de confort, de sécurité et de visibilité, comprenant un toit rigide couvrant le pilote et le passager avec une structure arrière ouverte, un pare-brise en verre feuilleté, un essuie-glace, et un dossier pour pilote.

Le dispositif selon l'invention est un complément de carrosserie pour scooter constitué de plusieurs éléments :
- une structure tubulaire en acier de construction attachée à l'avant et portée à l'arrière du scooter par une autre structure tubulaire en acier de construction.
- un carénage en ABS/PMMA lisse avec protection UV recouvrant la structure avant et le toit.
- un pare-brise en verre feuilleté, de forme trapézoïdale inversée, légèrement double-bombé, et collé sur la structure.
- un système d'essuie-glace à balayage complet composé d'un moteur à deux vitesses branché sur la batterie par un faisceau électrique, d'un bras parallélogramme, d'un balai d'essuyage, et d'un bouton d'alimentation 0/1/2.
- une structure de portage arrière, indépendante et ouverte, permettant d'équilibrer la structure principale du toit rigide et de glisser un coffre additionnel sécurisé, tout en permettant aussi l'utilisation d'un top-case standard, et en gardant l'accès direct au coffre arrière du scooter sans manipulation du top-case.
- un dossier pour le pilote du scooter en polyuréthane collé sur une tôle d'acier permettant l'accroche à une structure de support du dossier en acier de construction, dispositif pouvant être retiré pour permettre le transport d'un passager, le dossier se rangeant sous la selle et la structure de soutien pivotant vers l'avant et se verrouillant sous le toit rigide avec une vis moletée polyamide à tige filetée (M6x16). Le renfort en acier du dossier est raccordé à la tôle d'appui par une charnière à ressort fermant (120 mm de largeur). La tôle d'appui est verrouillée dans la base de la structure arrière en acier par une vis tête ronde collet carré (8x50) et un écrou moleté à serrrage rapide (M8).

La visserie est de type tête bombée à six lobes.

Tous les bords de carénage sont recouverts d'un joint de finition.

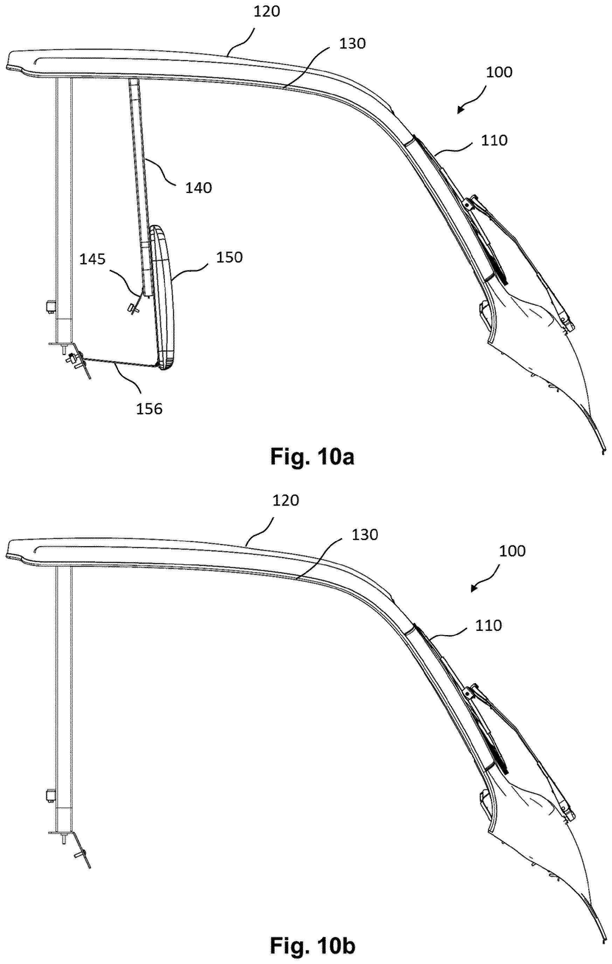

Les figures 8a et 8b précédemment décrites, ainsi que les figures 10a, 10b, 11 à 15 et 16a à 16s illustrent un complément de carrosserie pour scooter selon l'invention, un kit de confort, de sécurité et de visibilité, comprenant un toit rigide couvrant le pilote et le passager avec une structure arrière ouverte, un pare-brise en verre feuilleté, un essuie-glace, et un dossier pour pilote.

La figure 8a montre une vue de profil avant du kit monté sur un scooter avec le dossier pilote.

La figure 8b montre une vue de profil avant du kit monté sur un scooter sans le dossier pilote.

La figure 10a montre une vue de profil du kit avec le dossier pilote.

La figure 10b montre une vue de profil du kit sans le dossier pilote.

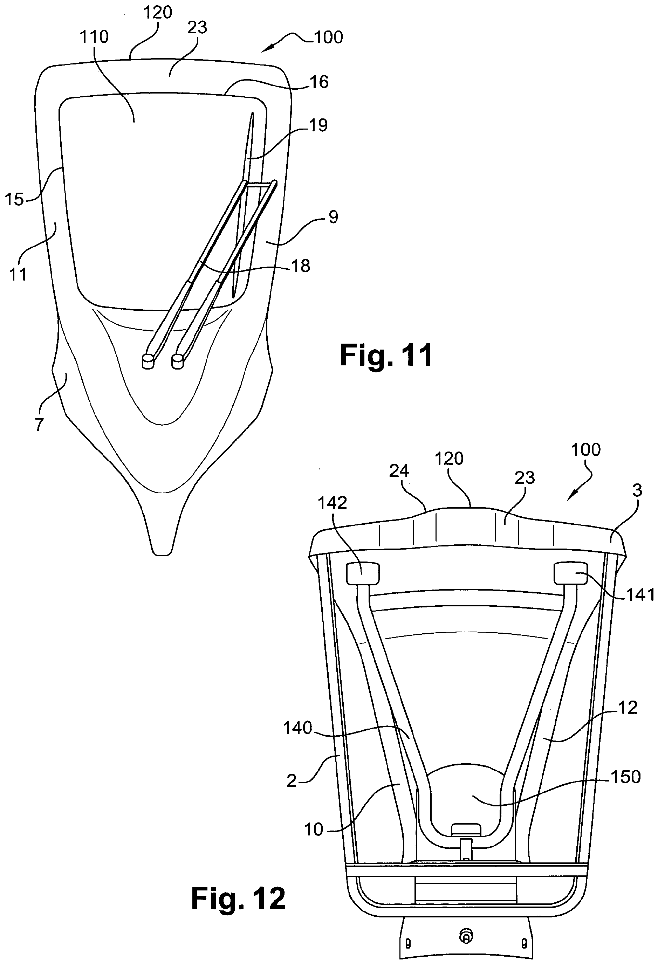

La figure 11 montre une vue de face du kit.

La figure 12 montre une vue d'arrière du kit, avec le dossier pilote.

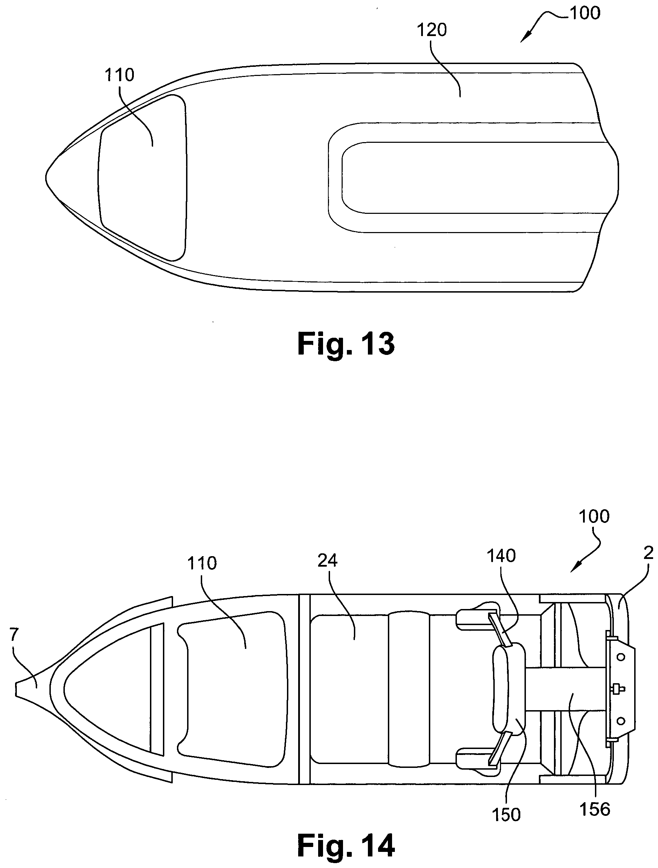

La figure 13 montre une vue de haut du kit.

La figure 14 montre une vue de dessous du kit, avec le dossier pilote.

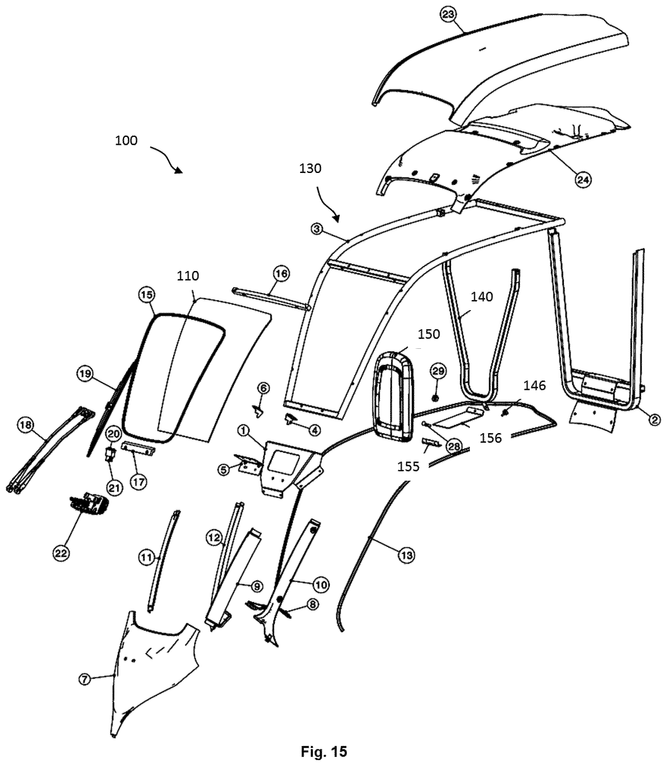

La figure 15 montre une vue éclatée du kit.

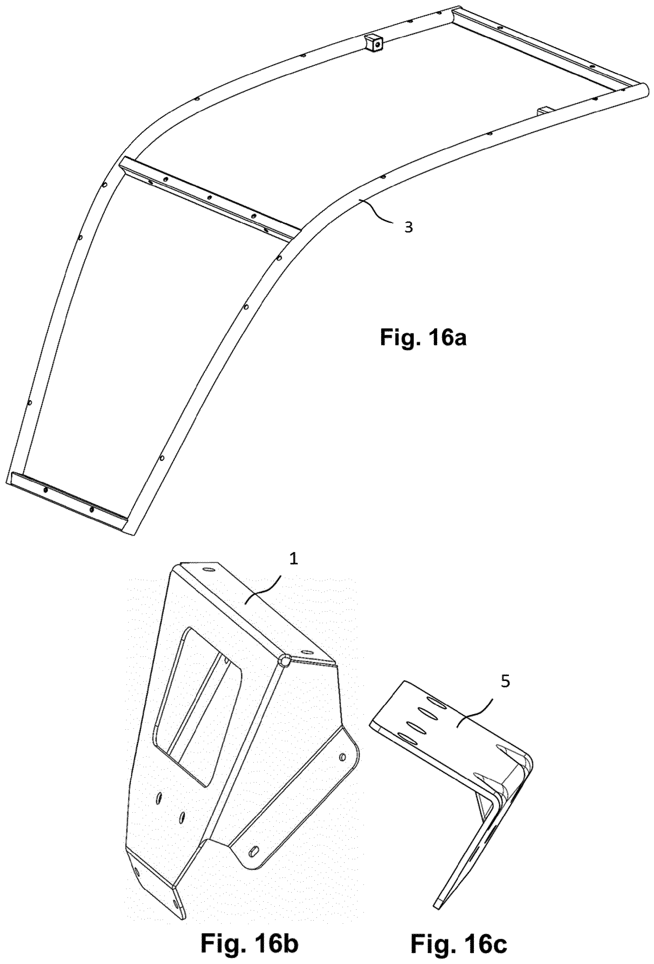

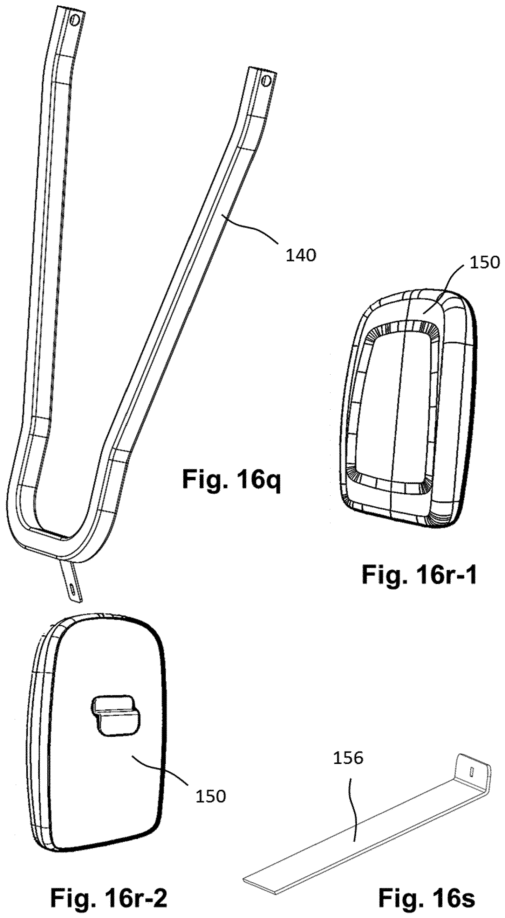

Les figures 16a à 16r détaillent certaines pièces de la vue éclatée du kit de la figure 15.

En référence aux figures 8a, 8b, 10a et 10b, le kit 100 de complément de carrosserie se présente sous deux configurations :
- aux figures 8a et 10a, avec dossier 150 pour le pilote en mode « mono-place », ou
- aux figures 8b et 10b, sans dossier pilote en mode « bi-place ».

Une fois positionné sur le scooter S dédié (ici un scooter de marque Piaggio, modèle MP3), on voit mieux, sur les figures 8a et 8b, les deux configurations complètes.

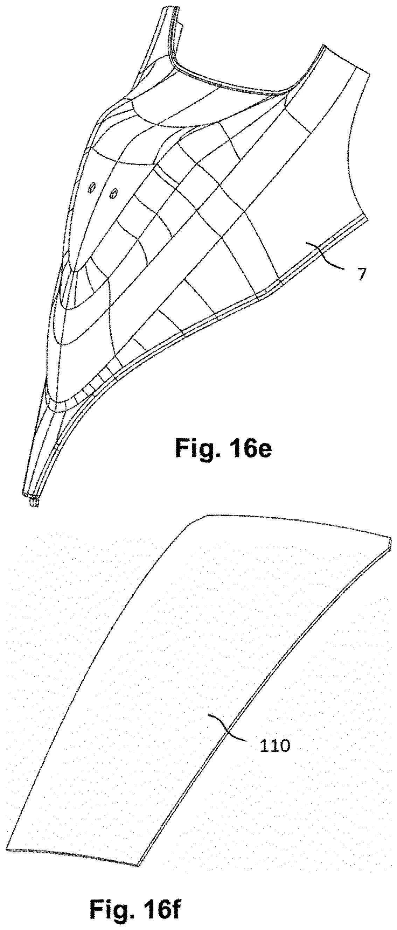

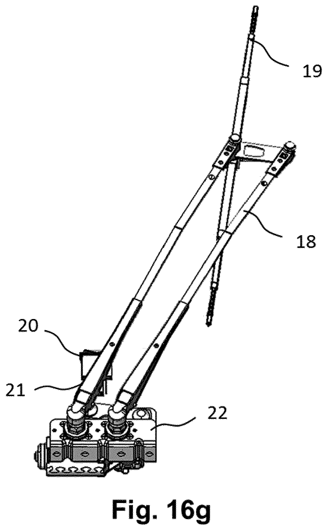

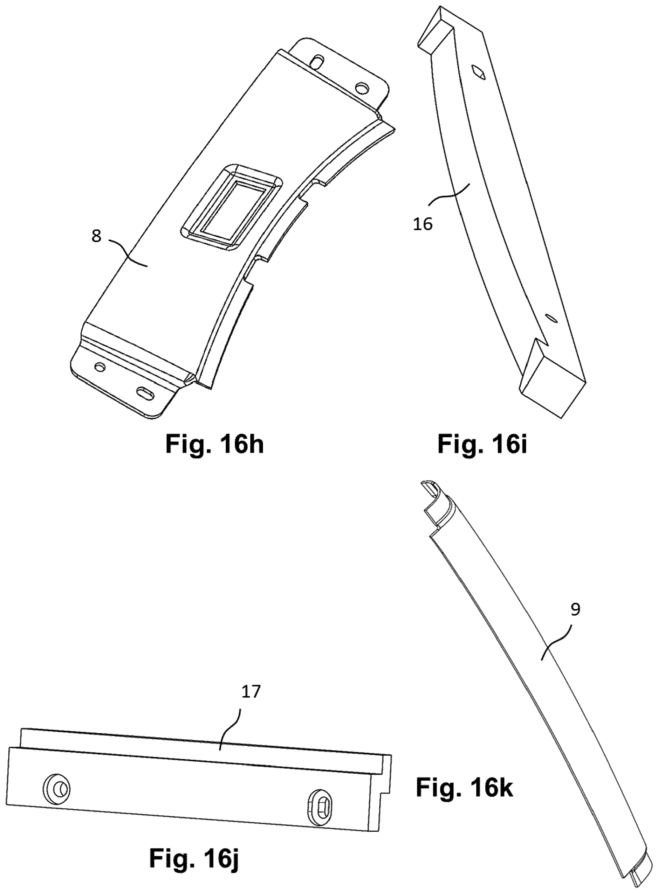

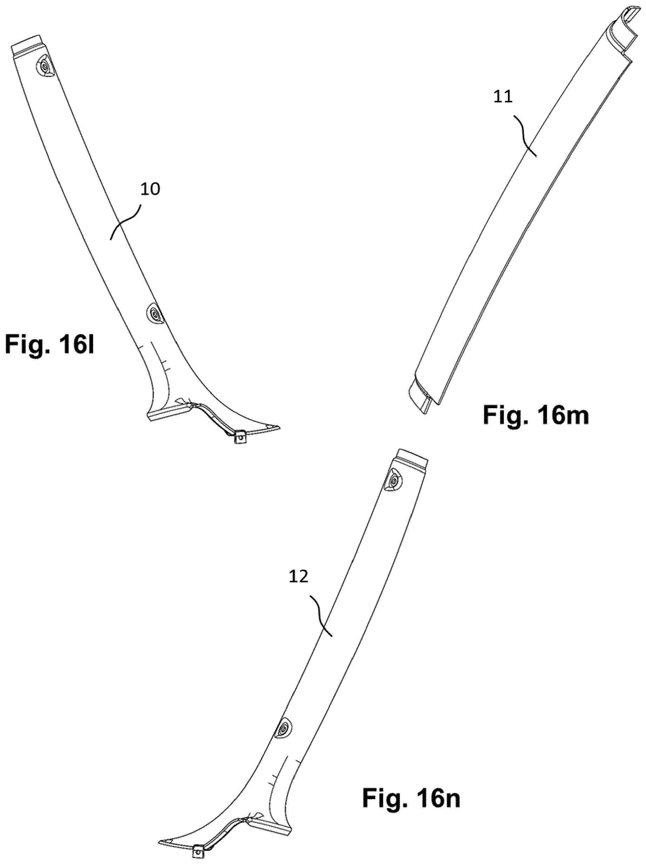

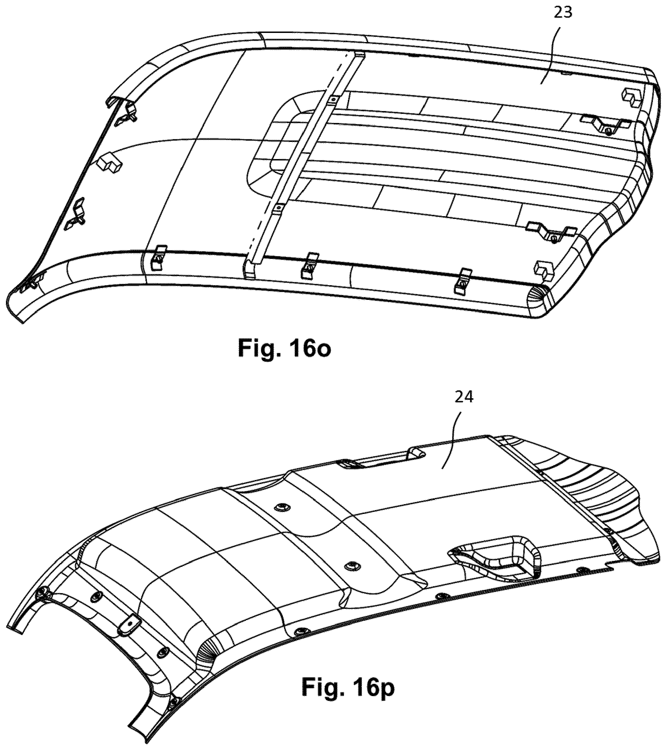

La figure 11 montre une vue de face du kit 100 présentant :
- un nouveau carénage 7, également représenté aux figures 15 et 16e, cachant le moteur de l'essuie-glace (représenté aux figures 15 et 16g) et la structure de soutien du pare-brise (représentée aux figures 15 et 16j),
- un double-bras d'essuie-glace 18 et son balai d'essuyage 19 (le second balai sur la partie gauche indique l'amplitude de balayage), également représentés aux figures 15 et 16g,
- un pare-brise 110 de forme trapézoïdale inversée (plus large en haut qu'en bas), également représenté aux figures 15 et 16f,
- un carénage des montants de la structure centrale, c'est-à-dire un carénage de montant à gauche 9 et un carénage de montant à droite 11, également représentés à la figure 15 ainsi que, respectivement, aux figures 16k et 16m et cachant les tubes d'acier et les bords du pare-brise 110, la partie avant du toit rigide 23, également représentée aux figures 15 et 16o, couvrant le haut du pare-brise 110 et la structure haute de soutien 16 du pare-brise, également représentée aux figures 15 et 16i, et
- un joint d'étanchéité 15 du pare-brise, également représenté à la figure 15.

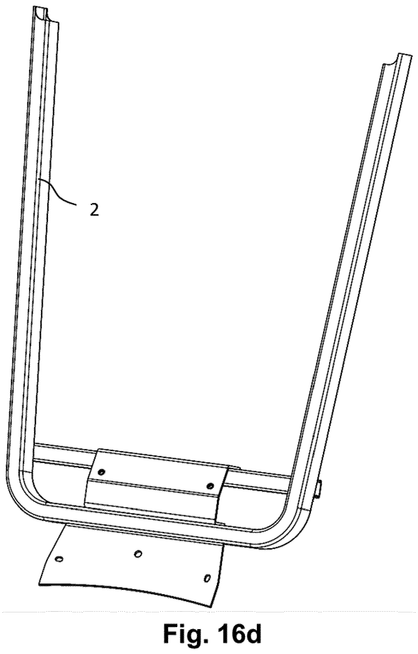

La figure 12 montre une vue arrière du kit 100 présentant :
- le support arrière 2 ouvert de la structure centrale 3 (barre en forme de « U »), ledit support arrière 2 étant également représenté aux figures 15 et 16d,
- le support 140 du dossier (barre de forme entre « U » et « V »), également représenté aux figures 15 et 16q, avec ses deux attaches hautes pivotantes 141, 142 sur la structure centrale 3, également représentée aux figures 15 et 16a, au travers de la doublure 24 du toit rigide 120, et
- l'arrière du dossier 150 lui-même, également représenté aux figures 15, 16r-1 et 16r-2,
- les doublures de montant de la structure centrale 3, c'est-à-dire la doublure de montant à gauche 10 et la doublure de montant à droite 12, également représentées aux figures 15, 16l et 16n, et
- le bord arrière du toit rigide 120.

La figure 13 montre une vue de haut du kit 100 présentant :
- le haut du pare-prise 110 recouvert par le toit 120 rigide, et
- le toit 120 rigide lui-même avec ses deux rainures (à gauche et à droite) pour empêcher l'eau de s'écouler vers les côtés et la guider vers l'arrière,
- ainsi que la petite bosse design permettant un meilleur écoulement de l'air pour l'aérodynamisme.

La figure14 montre une vue de dessous du kit 100 présentant :
- le mécanisme d'essuie-glace, également illustré à la figure 16g, sous le carénage 7,
- une vue du pare-brise 110,
- une vue du dispositif de dossier 140, 150 avec son attache de stabilisation et de renfort 156, également représentée à la figure 16s, sur le support arrière 2,
- et surtout la doublure 24, également illustrée à la figure 16p, du toit 120 rigide, cachant la structure centrale 130.

La figure 15 montre une vue éclatée du kit 100 d'adaptation, qui est donc composé :
- d'une structure 130 en acier de construction composée de trois sous-éléments, une structure avant 1, une structure centrale 3, et une structure arrière 2,
- d'une carrosserie en ABS/PMMA thermoformée avec un carénage avant 7 et ses supports de carénage 4, 6, un carénage tableau de bord 8, un carénage montant gauche 9, un carénage montant droit 11, une doublure de montant gauche 10, une doublure de montant droit 12, un toit rigide avec bords anti-débordement d'eau 23, et une doublure de toit rigide 24,
- d'une structure de dossier 140 avec son attache 146 de verrouillage sous le toit,
- d'un dossier 150,
- d'une tôle d'appui 156 du dossier avec sa charnière 155 et son système de verrouillage 157 par vis 28 et écrou 29,
- d'un pare-brise 110 en verre feuilleté avec les supports de pare-brise 16, 17 et le joint d'étanchéité 15,
- d'un système d'essuie-glace avec un support 5 du moteur, un bras parallélogramme 18, un balai d'essuyage (19), un bouton interrupteur à deux vitesses 20 avec son porte-interrupteur 21, et le moteur 22 lui-même,
- d'un joint de finition (13) et d'un faisceau électrique pour alimenter le moteur 22 de l'essuie-glace.

A titre indicatif, la structure tubulaire en acier de construction a une limite élastique minimum de 235 Mpa, tout comme les autres éléments métalliques du kit. Les éléments de carrosserie sont d'une épaisseur d'environ 3 mm après thermoformage, les fins de pièces étant ébavurées avec absence de blanchiment. Le dossier est en mousse de polyuréthane de dureté 40 kg. Le pare-brise de standard automobile est épais de 4.46 mm, il est traité anti-rayures et anti-UV. Pour le système d'essuie-glace, l'alimentation électrique du moteur à deux vitesses est faite par un faisceau relié à la batterie via un relais et un fusible de 25A, la coupure du faisceau se faisant sur le contacteur de démarrage. Le poids total du kit est d'environ 40 kg et une fois monté, le scooter mesure environ 1 m90 de haut, sans changer sa longueur et sa largeur d'origine.

La figure 16a montre la structure centrale 3 du kit 100.

La figure 16b montre le support 1 de structure avant du kit 100.

La figure 16c montre le support 5 de mécanisme d'essuie-glace du kit 100.

La figure 16d montre le support 2 de structure arrière du kit 100.

La figure 16e montre le carénage avant 7 du kit 100.

La figure 16f montre le pare-brise 110 du kit 100.

La figure 16g montre le mécanisme d'essuie-glace du kit 100 comprenant le bras parallélogramme 18, le balai d'essuyage 19, le bouton interrupteur 20 à deux vitesses, le porte interrupteur 21 et le moteur 22 à double vitesse.

La figure 16h montre le carénage de tableau de bord 8 du kit 100.

La figure 16i montre la barre de fixation haute 16 du pare-brise 110.

La figure 16j montre la barre de fixation basse 17 du pare-brise 110.

La figure 16k montre le carénage 9 de montant à gauche du kit 100.

La figure 16l montre la doublure 10 de montant à gauche du kit 100.

La figure 16m montre le carénage 11 de montant à droite du kit 100.

La figure 16n montre la doublure 12 de montant à droite du kit 100.

La figure 16o montre la face extérieure haute 23 du toit rigide 120.

La figure 16p montre la doublure intérieure basse 24 du toit rigide 120.

La figure 16q montre la structure pivotante 140 d'attache du dossier 150.

Les figures 16r-1 et 16r-2 montrent des première et deuxième vues du dossier 150.

La figure 16s montre la tôle d'appui 156 du dossier 150.

La structure suit la norme de qualité de soudures NF EN ISO 5817, la norme de contrôle visuel des soudures NF EN 970, les normes de contrôle ressuage NF EN 571-1 et NF EN 1289 classe 1. La carrosserie suit la norme de compostabilité de matière plastique NF EN 14995. Le câblage suit la norme de réalisation NFC15100. Le pare-brise suit la réglementation européenne ECE R43 et la norme 97/24/CEE C12 pour les dispositifs de vitrage. Le mécanisme d'essuyage respecte les directives européennes relative à la norme 97/24/CEE C12 pour les essuie-glaces. L'acier de construction non allié suit la norme NF EN 10025, le profil creux pour la construction fini à chaud en acier allié suit la norme NF EN 10210, le profil creux pour la construction fini à froid en acier allié suit la norme NF EN 10219. Tous les assemblages soudés suivent la norme NF P 22 417 pour les dispositions constructives et vérification des soudures, et la norme NF EN 1090-2 pour l'exécution des structures en acier. Les assemblages par visserie non précontraints suivent les normes NF P 22430 et NF EN 1090-2. Les assemblages par visserie à serrages contrôlés suivent les normes NF P 22460 et NF P 22469. Les assemblages par collage suivent les normes NF EN 13887 et NF EN 924.

L'installation électrique est conforme à la réglementation UTE C 15-103 avec un indice de protection IP 65. Toute la visserie est cadmiée ou galvanisée et de qualité 8.8 minimum.

Le kit est utilisable sur tout scooter à deux, trois ou quatre roues, dont le poids d'origine à vide est supérieur à 175 kg. Le modèle présenté ici est dédié aux scooters de marque Piaggio et modèle MP3, de toutes cylindrées avec la structure standard.

On décrit donc dans la présente description un dispositif 100 de complément de carrosserie pour scooter S à deux, trois ou quatre roues, un kit de protection, de confort, et de visibilité, comprenant un toit rigide couvrant le pilote et le passager avec une face arrière ouverte et une face avant fermée avec un pare-brise en verre feuilleté et un mécanisme d'essuie-glace, et un dossier amovible pour pilote.

La structure 130 du dispositif 100 est avantageusement réalisée en acier de construction et composée de six sous-éléments : un support 1 de structure avant, un support 2 de structure arrière, une structure centrale 3, un support de carénage gauche 4, un support de carénage droite 6, et un support de mécanisme d'essuie-glace 5.

La carrosserie du dispositif 100 est avantageusement faite en ABS (acrylonitrile butadiène styrène) pour sa qualité mécanique et en PMMA (polyméthacrylate de méthyle) pour sa qualité optique anti-rayure et l'excellente tenue aux agressions atmosphériques, et composée de sept sous-éléments : un carénage avant 7, un carénage de tableau de bord 8, un carénage de montant à gauche 9, un carénage de montant à droite 11, une doublure de montant à gauche 10, une doublure de montant à droite 12, et un joint de finition 13.

Le pare-brise 110 du dispositif 100 est avantageusement fait en verre feuilleté de qualité automobile, et l'ensemble pare-brise est avantageusement composé de quatre sous-éléments: le pare-brise 110 lui-même, le joint d'étanchéité 15, la barre de fixation haute 16, et la barre de fixation basse 17.

Le système d'essuie-glace du dispositif 100 permet avantageusement un essuyage de la surface globale du pare-brise 110 avec un mouvement parallélogramme déformé en trapèze inversé, il est avantageusement composé de six sous-éléments : un bras parallélogramme 18, un balai d'essuyage 19, un moteur à double vitesse 22, un bouton interrupteur à deux vitesses 20, un porte interrupteur 21, et un faisceau électrique branché sur la batterie.

Le toit 120 rigide du dispositif 100 est avantageusement un élément de carrosserie complexe fait aussi en ABS/PMMA, et constitué de deux sous-éléments : la face extérieure (haute) 23 du toit 120 rigide, et la doublure intérieure 24 (basse) du toit 120 rigide.

Le dispositif 140, 150 de dossier pour pilote permet avantageusement une configuration du scooter S en mode « mono-place » avec le dossier 150 en place, ou en mode « bi-place » avec le dossier 150 démonté et sa structure verrouillée sous le toit 120 rigide. Il est avantageusement composé de sept sous-éléments : une structure pivotante d'attache du dossier 140, le dossier 150 lui-même en mousse de polyuréthane avec un renfort 154 en acier sur sa face arrière, une tôle d'appui 156 du dossier pour le stabiliser contre la structure arrière 2, une charnière 27 à ressort fermant, une vis à tête ronde et collet carré 28, un écrou moleté à serrage rapide 29, et une vis moletée polyamide à tige filetée 30.

En abrégé, la présente invention concerne, selon l'un de ses aspects, un complément de carrosserie pour scooter, kit de confort, de sécurité et de visibilité, comprenant un toit rigide couvrant le pilote et le passager, un pare-brise en verre feuilleté, un essuie-glace, et un dossier pour pilote. L'invention concerne un dispositif permettant d'équiper un scooter d'une structure solide de protection contre les intempéries tout en augmentant la sécurité du pilote et du passager et en améliorant la visibilité en temps de pluie, avec un ajout de confort pour le pilote grâce à un dossier dédié. Il est avantageusement composé de six éléments principaux : une structure en acier, un carénage avant, un pare-brise, un système d'essuie-glace, un toit rigide, et un dossier amovible pour le pilote. Le dispositif est utilisable sur tout scooter à deux, trois ou quatre roues, dont le poids d'origine à vide est supérieur à 175 kg.

## Revendications

1. Dispositif d'habitacle (100) pour un véhicule à moteur (S) présentant au moins une place pilote et une place passager située derrière la place pilote, le dispositif d'habitacle (100) comportant une structure de support (130) d'un pare-brise (110) et d'un toit (120) abritant la place pilote et la place passager, la structure de support (130) étant destinée à être fixée audit véhicule à moteur (S),
le dispositif d'habitacle (100) étant **caractérisé en ce qu'**il comprend :
- un support pendulaire (140) fixé à la structure de support (130) par l'intermédiaire d'au moins une liaison pivot (141, 142), et
- un dossier amovible (150) pour pilote présentant un premier moyen d'accroche (151) permettant de rendre ledit dossier amovible (150) solidaire du support pendulaire (140).

2. Dispositif d'habitacle (100) selon la revendication précédente **caractérisé en ce que** le dossier amovible (150) présente un deuxième moyen d'accroche (152) permettant de rendre ledit dossier amovible (150) solidaire dudit véhicule à moteur (S).

3. Dispositif d'habitacle (100) selon la revendication précédente **caractérisé en ce que** le deuxième moyen d'accroche (152) permet de rendre ledit dossier amovible (150) solidaire de la structure de support (130) et du véhicule à moteur (S).

4. Dispositif d'habitacle (100) selon l'une quelconque des revendications 2 ou 3 **caractérisé en ce qu'**il comporte un système de sécurisation du deuxième moyen d'accroche (152) du dossier amovible (150).

5. Dispositif d'habitacle (100) selon la revendication précédente **caractérisé en ce que** le système de sécurisation du deuxième moyen d'accroche (152) est un coffre arrière pouvant être verrouillé.

6. Dispositif d'habitacle (100) selon l'une quelconque des revendications précédentes **caractérisé en ce que** le support pendulaire (140) comporte des premier et deuxième bras, respectivement fixés à des premier et deuxième montants latéraux de la structure de support (130) au moyen d'une première liaison pivot (141) et d'une deuxième liaison pivot (142).

7. Dispositif d'habitacle (100) selon la revendication 6 **caractérisé en ce que** le support pendulaire (140) a sensiblement une forme d'une lettre choisie parmi la liste suivante : « U », « V », « Y », « H », «X»,«M».

8. Dispositif d'habitacle (100) selon l'une quelconque des revendications précédentes **caractérisé en ce que** le support pendulaire (140) présente :
- une position de rangement, selon laquelle ledit support pendulaire (140) se trouve dans un plan sensiblement parallèle au plan du toit (120) ;
- une position déployée, selon laquelle ledit support pendulaire (140) se trouve dans un plan sensiblement perpendiculaire au plan du toit (120).

9. Dispositif d'habitacle (100) selon la revendication précédente **caractérisé en ce que** le support pendulaire (140) comprend un moyen d'attache (144) dudit support pendulaire (140) à la structure de support (130) pour le maintien du support pendulaire (140) dans la position de rangement.

10. Dispositif d'habitacle (100) selon la revendication précédente **caractérisé en ce que** le moyen d'attache (144) du support pendulaire (140) à la structure de support (130) comporte une languette métallique (145) et une vis de verrouillage (146) positionnée dans ladite languette métallique (145).

11. Dispositif d'habitacle (100) selon l'une quelconque des revendications précédentes **caractérisé en ce qu'**il comporte un moyen de réglage de la position et/ou de l'orientation du dossier amovible (150).

12. Dispositif d'habitacle (100) selon l'une quelconque des revendications 2 à 11 **caractérisé en ce que** le deuxième moyen d'accroche (152) du dossier amovible (150) comprend une charnière à ressort (155) fixée d'une part audit dossier amovible (150) et prolongée d'autre part par une tôle d'appui (156), la charnière à ressort (155) permettant de rabattre la tôle d'appui (156) dans un plan sensiblement parallèle au plan du dossier amovible (150).

13. Dispositif d'habitacle (100) selon l'une quelconque des revendications précédentes **caractérisé en ce que** le véhicule à moteur (S) est choisi parmi la liste suivante : un scooter, une motocyclette, un tricycle, un quadricycle.

14. Procédé de changement de configuration d'un dispositif d'habitacle (100) selon l'une quelconque des revendications précédentes, d'une configuration « monoplace » à une configuration « biplace », le procédé comportant :
- une première étape selon laquelle, le support pendulaire (140) se trouvant initialement dans un plan sensiblement perpendiculaire au plan du toit (120) et le dossier amovible (150) étant solidaire du support pendulaire (140) grâce à son premier moyen d'accroche (151), on désolidarise le dossier amovible (150) du support pendulaire (140) ;
- une deuxième étape selon laquelle le support pendulaire (140) effectue un mouvement de rotation autour de l'axe de la liaison pivot (141, 142) afin de placer ledit support pendulaire (140) dans un plan sensiblement parallèle au plan du toit (120).

15. Procédé de montage d'un dispositif d'habitacle (100) selon l'une quelconque des revendications 1 à 13, le procédé comportant les étapes suivantes :
- démontage d'un pare-brise du véhicule à moteur (S), ledit démontage libérant un premier emplacement de fixation ;
- fixation du dispositif d'habitacle (100) sur le premier emplacement de fixation ;
- démontage d'un élément arrière du véhicule à moteur (S), ledit démontage libérant un deuxième emplacement de fixation ;
- fixation du dispositif d'habitacle (100) sur le deuxième emplacement de fixation préexistant du véhicule à moteur (S).

## Patentansprüche

1. Kabinenvorrichtung (100) für ein Motorfahrzeug (S), die wenigstens einen Pilotenplatz und einen Beifahrerplatz aufweist, der sich hinter dem Pilotenplatz befindet, wobei die Kabinenvorrichtung (100) eine Trägerstruktur (130) einer Windschutzscheibe (110) und ein Dach (120) umfasst, das den Pilotenplatz und den Beifahrerplatz schützt, wobei die Trägerstruktur (130) dazu bestimmt ist, an dem genannten Motorfahrzeug (S) befestigt zu sein, wobei die Kabinenvorrichtung (100) **dadurch gekennzeichnet ist, dass** sie umfasst:
- einen Pendelträger (140), der an der Trägerstruktur (130) mittels wenigstens einer Drehzapfenverbindung (141, 142) befestigt ist, und
- eine abnehmbare Rückenlehne (150) für einen Piloten, die ein erstes Einhakmittel (151) umfasst, das es ermöglicht, die abnehmbare Rückenlehne (150) fest mit dem Pendelträger (140) zu verbinden.

2. Kabinenvorrichtung (100) gemäß dem voranstehenden Anspruch, **dadurch gekennzeichnet, dass** die abnehmbare Rückenlehne (150) ein zweites Einhakmittel (152) aufweist, das es ermöglicht, die genannte abnehmbare Rückenlehne (150) fest mit dem genannten Motorfahrzeug (S) zu verbinden.

3. Kabinenvorrichtung (100) gemäß dem voranstehenden Anspruch, **dadurch gekennzeichnet, dass** das zweite Befestigungsmittel (152) es ermöglicht, die genannte abnehmbare Rückenlehne (150) fest mit der Trägerstruktur (130) und dem Motorfahrzeug (S) zu verbinden.

4. Kabinenvorrichtung (100) gemäß irgendeinem der Ansprüche 2 oder 3, **dadurch gekennzeichnet, dass** sie ein Sicherungssystem des zweiten Befestigungsmittels (152) der abnehmbaren Rückenlehne (150) umfasst.

5. Kabinenvorrichtung (100) gemäß dem voranstehenden Anspruch, **dadurch gekennzeichnet, dass** das Sicherungssystem des zweiten Einhakmittels (152) ein hinterer Kasten ist, der verriegelt werden kann.

6. Kabinenvorrichtung (100) gemäß irgendeinem der voranstehenden Ansprüche, **dadurch gekennzeichnet, dass** der Pendelträger (140) erste und zweite Arme umfasst, die jeweils an dem ersten und zweiten lateralen Balken der Trägerstruktur (130) mittels einer ersten Drehzapfenverbindung (141) und einer zweiten Drehzapfenverbindung (142) befestigt sind.

7. Kabinenvorrichtung (100) gemäß Anspruch 6, **dadurch gekennzeichnet, dass** der Pendelträger (140) deutlich eine Form eines aus der folgenden Liste ausgewählten Buchstaben hat: "U", "V", "Y", "H", "X", "M".

8. Kabinenvorrichtung (100) gemäß irgendeinem der voranstehenden Ansprüche, **dadurch gekennzeichnet, dass** der Pendelträger (140) aufweist:
- eine Verstauposition, gemäß der der genannte Pendelträger (140) sich in einer zur Ebene des Dachs (120) deutlich parallelen Ebene befindet;
- eine ausgefahrene Position, gemäß der der genannte Pendelträger (140) sich in einer zur Ebene des Dachs (120) deutlich lotrechten Ebene befindet.

9. Kabinenvorrichtung (100) gemäß dem voranstehenden Anspruch, **dadurch gekennzeichnet, dass** der Pendelträger (140) ein Befestigungsmittel (144) des genannten Pendelträgers (140) an der Trägerstruktur (130) zum Festhalten des Pendelträgers (140) in der Verstauposition umfasst.

10. Kabinenvorrichtung (100) gemäß dem voranstehenden Anspruch, **dadurch gekennzeichnet, dass** das Befestigungsmittel (144) des Pendelträgers (140) an der Trägerstruktur (130) eine Metallzunge (145) und eine Feststellschraube (146) umfasst, die in der genannten Metallzunge (145) platziert ist.

11. Kabinenvorrichtung (100) gemäß irgendeinem der voranstehenden Ansprüche, **dadurch gekennzeichnet, dass** sie ein Einstellmittel der Position und / oder der Ausrichtung der abnehmbaren Rückenlehne (150) umfasst.

12. Kabinenvorrichtung (100) gemäß irgendeinem der Ansprüche 2 bis 11, **dadurch gekennzeichnet, dass** das zweite Befestigungsmittel (152) der abnehmbaren Rückenlehne (150) ein Federscharnier (155) umfasst, das einerseits an der abnehmbaren Rückenlehne (150) befestigt ist und andererseits durch einen Stützbereich (156) verlängert ist, wobei das Federscharnier (155) das Umklappen des Stützblechs (156) in einer zur Ebene der abnehmbaren Rückenlehne (150) deutlich parallelen Ebene erlaubt.

13. Kabinenvorrichtung (100) gemäß irgendeinem der voranstehenden Ansprüche, **dadurch gekennzeichnet, dass** das Motorfahrzeug (S) aus der nachstehenden Liste ausgewählt ist: einem Scooter, einem Mofa, einem Dreirad, einem Quad.

14. Konfigurationsänderungsverfahren einer Kabinenvorrichtung (100) gemäß irgendeinem der voranstehenden Ansprüche, einer "einsitzigen" Konfiguration, einer "zweisitzigen" Konfiguration, wobei das Verfahren umfasst:
- einen ersten Schritt, gemäß der der Pendelträger (140), wenn er sich anfänglich in einer zur Ebene des Dachs (120) deutlich lotrechten Ebene befindet und die abnehmbare Rückenlehne (150), wenn sie dank ihres ersten Einhakmittels (151) fest an dem Pendelträger (140) befestigt ist, die abnehmbare Rückenlehne (150) des Pendelträgers (140) gelöst wird;
- einen zweiten Schritt, gemäß dem der Pendelträger (140) eine Rotationsbewegung um die Achse der Drehzapfenverbindung (141, 142) durchführt, um den genannten Pendelträger (140) in einer zur Ebene des Dachs (120) deutlich parallelen Ebene zu platzieren.

15. Montageverfahren einer Kabinenvorrichtung (100) gemäß irgendeinem der Ansprüche 1 bis 13, wobei das Verfahren die folgenden Schritte umfasst:
- Demontage einer Windschutzscheibe des Motorfahrzeugs (S), wobei die genannte Demontage eine erste Befestigungsstelle freisetzt;
- Befestigung der Kabinenvorrichtung (100) auf der ersten Befestigungsstelle;
- Demontage eines hinteren Elements des Motorfahrzeugs (S), wobei die genannte Demontage eine zweite Befestigungsstelle freisetzt;
- Befestigung der Kabinenvorrichtung (100) auf der zweiten, bereits vorhandenen Befestigungsstelle des Motorfahrzeugs (S).

## Claims

1. Passenger compartment device (100) for a motor vehicle (S) which offers at least one driver's position and one passenger's position located behind the driver's position, where the passenger compartment device (100) comprises a support structure (130) for a windscreen (110) and a roof (120) sheltering the driver's position and the passenger's position, where the support structure (130) is intended to be fixed to said motor vehicle (S),
the passenger compartment device (100) being **characterised in that** it comprises:
- a pendular support (140) fixed to the support structure (130) by means of at least one pivot link (141, 142), and
- a removable back-rest (150) for the driver which has a first means of attachment (151) which allows said removable back-rest (150) to be attached to the pendular support (140).

2. Passenger compartment device (100) according to the preceding claim **characterised in that** the removable back-rest (150) has a second means of attachment (152) which allows said removable back-rest (150) to be attached to said motor vehicle (S).

3. Passenger compartment device (100) according to the preceding claim **characterised in that** the second means of attachment (152) allows said removable back-rest (150) to be attached to the support structure (130) and to the motor vehicle (S).

4. Passenger compartment device (100) according to any of claims 2 or 3 **characterised in that** it comprises a system for securing the second means of attachment (152) of the removable back-rest (150).

5. Passenger compartment device (100) according to the preceding claim **characterised in that** the system for securing the second means of attachment (152) is a rear box that can be locked.

6. Passenger compartment device (100) according to any of the preceding claims **characterised in that** the pendular support (140) comprises first and second arms, fixed respectively to first and second lateral stays of the support structure (130) by means of a first pivot link (141) and a second pivot link (142).

7. Passenger compartment device (100) according to claim 6 **characterised in that** the pendular support (140) substantially has the shape of a letter chosen from the following list: "U", "V", "Y", "H", "X", "M".

8. Passenger compartment device (100) according to any of the preceding claims, **characterised in that** the pendular support (140) has:
- a storage position, according to which said pendular support (140) is in a plane which is substantially parallel to the plane of the roof (120);
- a deployed position, according to which said pendular support (140) is in a plane which is substantially perpendicular to the plane of the roof (120).

9. Passenger compartment device (100) according to the previous claim **characterised in that** the pendular support (140) comprises a means of attachment (144) of said pendular support (140) to the support structure (130) so as to maintain the pendular support (140) in the storage position.

10. Passenger compartment device (100) according to the preceding claim **characterised in that** the means of attachment (144) of the pendular support (140) to the support structure (130) comprises a metal strip (145) and a locking screw (146) positioned within said metal strip (145).

11. Passenger compartment device (100) according to any of the preceding claims **characterised in that** it comprises a means of adjustment of the position and/or the orientation of the removable back-rest (150).

12. Passenger compartment device (100) according to any of claims 2 to 11, **characterised in that** the second means of attachment (152) of the removable back-rest (150) comprises a spring hinge (155) fixed on the one hand to said removable back-rest (150) and extended on the other hand by a support panel (156), the spring hinge (155) allowing the support panel (156) to fold back in a plane substantially parallel to the plane of the removable back-rest (150).

13. Passenger compartment device (100) according to any of the preceding claims **characterised in that** the motor vehicle (S) is chosen from the following list: a scooter, a motorcycle, a tricycle, a quadricycle.

14. Method for changing the configuration of a passenger compartment device (100) according to any of the preceding claims, from a "single seat" configuration to a "dual seat" configuration, where the method comprises:
- a first step according to which, where the pendular support (140) is initially in a plane that is substantially perpendicular to the plane of the roof (120) and where the removable back-rest (150) is attached to the pendular support (140) by means of its first means of attachment (151), the removable back-rest (150) is released from the pendular support (140);
- a second step according to which the pendular support (140) makes a rotation movement around the axis of the pivot link (141, 142) in order to place said pendular support (140) in a plane that is substantially parallel to the plane of the roof (120).

15. Method for assembling a passenger compartment device (100) according to any of claims 1 to 13, where the method comprises the following steps:
- removal of a wind-screen from the motor vehicle (S), where said removal frees up a first fixing location;
- fixing the passenger compartment device (100) onto the first fixing location;
- removal of a rear element of the motor vehicle (S), where said removal frees up a second fixing location;
- fixing the passenger compartment device (100) onto the second pre-existing fixing location of the motor vehicle (S).
